# FASCICULE DE BREVET EUROPEEN

(11) **EP 1 462 759 B1**
(45) Date de publication et mention de la délivrance du brevet: **09.03.2016**
(21) Numéro de dépôt: 04101247.7
(22) Date de dépôt: 25.03.2004
(51) Int. Cl.: G01B 5/008, G01B 5/20, G01B 7/008, G01B 7/28

(54) **Dispositif de mesure de profil**
Vorrichtung zur Messung eines Profils
Apparatus for measuring a profile

(30) Priorité: 28.03.2003 FR 0350077
(43) Date de publication de la demande: 29.09.2004
(73) Titulaire: SNECMA, 75015 Paris (FR)
(72) Inventeur: PAILLARSE, Bernard, Philippe, Jacques, 91100, CORBEIL ESSONNES (FR); JAMAULT, Pierre, Paul, 77167, FAY LES NEMOURS (FR); THIBAULT, Dominique, 77176, NANDY (FR)
(74) Mandataire: Ahner, Philippe

(56) Documents cités:
- FR-A- 2 658 907
- US-A- 3 831 283
- US-A- 4 031 628
- US-A- 4 464 839
- US-A- 4 622 751
- US-A- 5 402 582

## Description

### DOMAINE TECHNIQUE

L'invention présente se rapporte à un dispositif de mesure de profil.

Elle peut trouver emploi notamment pour des pièces au relief compliqué comme les rotors de turbine, pour mesurer des profils de rainures d'aubes ou de léchettes d'étanchéité qui sont des crêtes aiguës destinées à creuser des garnitures annulaires en matériau abradable pour établir une étanchéité par labyrinthe. Les profils mesurés pourront être axiaux ou circulaires sur des pièces de révolution.

Les dispositifs métrologiques de mesure de profil ou plus généralement de relief d'une surface comprennent les suivantes :
- les comparateurs à tige palpeuse et cadran de mesure de l'enfoncement, qui ne permettent que des mesures rudimentaires,
- des palpeurs plus perfectionnés mais encombrants et coûteux en conséquence, situés au bout de bras passifs aux articulations multiples munies de codeurs de déplacement, et dont un exemple est décrit dans le document FR 2 702 043 (ou US 5 402 582),
- des palpeurs motorisés montés de façon flexible sur un support mobile et dont les mouvements sont mesurés à mesure que le moteur déplace le support du palpeur et qu'une flexion du palpeur est mesurée ; un exemple est décrit dans le document US 4 622 751 ; mais seuls des mouvements simples sont possibles,
- des dispositifs non mécaniques utilisant la photogrammétrie et fondés notamment sur la réflexion de lumière par la surface à mesurer ; ils sont efficaces mais coûteux.

La situation est plus compliquée pour des profils aux reliefs accusés, surtout s'élargissant sous la surface de la pièce, ce qui est le cas des rainures d'aubes qui ne communiquent à la surface de la pièce que par un col plus étroit. Il est alors problématique d'atteindre les points du profil situés au fond de la cavité, et surtout ceux des parties en surplomb disposées sous le col. Même le palpeur monté sur un bras articulé est souvent insuffisant malgré sa souplesse puisqu'il doit en pratique posséder des sections relativement larges pour posséder la résistance mécanique voulue et abriter les moteurs passifs de mesure et de maintien des articulations en position stable. Pour des vérifications de tels profils, la demanderesse utilisait déjà des jeux de cales, qui étaient promenées dans les rainures à la recherche d'un endroit bloquant ou éventuellement d'un jeu excessif. Il est manifeste que les cales ne permettent que des mesures rudimentaires et présentent l'inconvénient d'être spécifiques à une section de rainure déterminée. Une autre méthode qu'elle utilisait consistait à mouler une empreinte de la section de rainure, puis à la sortir et à mesurer son profil dans de meilleures conditions que celui de la rainure elle-même. Cette méthode donnait de bons résultats mais n'était pas commode, étant très longue.

Parmi d'autres dispositifs de l'art antérieur, US-A-4 464 839 décrit un dispositif de mesure de profil où une pièce est posée sur un support et un palpeur parcourt son profil, sans possibilité de placer la pièce à une position ou une orientation constante pour répéter les mesures de façon à pouvoir les comparer avant et après une passe d'usinage par exemple, la pièce devant d'ailleurs être démontée de façon désavantageuse de la machine-outil d'usinage ; US-A-4 031 628 décrit un dispositif de mesure de longueur et de rayon d'un foret par une pointe de palpage, le foret étant monté sur un support ; FR-A-2 658 907, un dispositif muni de références de position pour un palpeur, de formes analogues à des quilles et enfichées dans des perçages d'un plateau tournant.

US 3 831 283 A est enfin conforme au préambule de la revendication indépendante et décrit un dispositif de mesure où la pièce à mesurer est montée sur un mandrin inséparable du dispositif et doit donc être démontée si nécessaire d'une machine d'usinage pour chaque mesure, et remontée ensuite, ce qui impose de réajuster sa position ou la trajectoire de l'outil à chaque fois.

Un dispositif simple est recherché pour mesurer des profils compliqués ou peu accessibles, à relief important ou en creux. On désire un dispositif à la fois simple et peu coûteux, facile à utiliser et d'une précision suffisante, de quelques dizaines de microns ou même quelques microns pour les applications mentionnées.

Il est apparu qu'un palpeur à actionnement manuel était seul susceptible d'offrir ces avantages, bien que ceux qu'on a déjà mentionnés (le comparateur et le bras articulé) soient nettement insuffisants pour des raisons différentes.

Le dispositif proposé ici est défini par la revendication 1.

L'opérateur saisit le bouton et déplace le palpeur jusqu'à lui faire toucher le profil, puis en suivant le profil. Il exploite les mouvements de la table dans les deux directions perpendiculaires de mouvement tout en profitant de l'absence de mouvement possible dans la troisième direction perpendiculaire pour rester dans le plan du profil à mesurer. On dispose de tables mobiles à la fois assez rigides et pourvues de capteurs de déplacement assez précis pour indiquer les déplacements du palpeur avec une très faible incertitude, malgré l'effort mal connu que peut appliquer l'opérateur. En pratique, le dispositif est assez souple et pour ne pas exiger d'efforts de manipulation importants, ce qui permet à l'opérateur de travailler délicatement et de ne pas donc introduire de déformation notable du palpeur ou d'autres éléments du dispositif.

Les premières figures 1, 2 et 3 illustrent un mode de réalisation de l'invention, et les dernières figures 4 et 5 un appareil n'appartenant pas à elle.

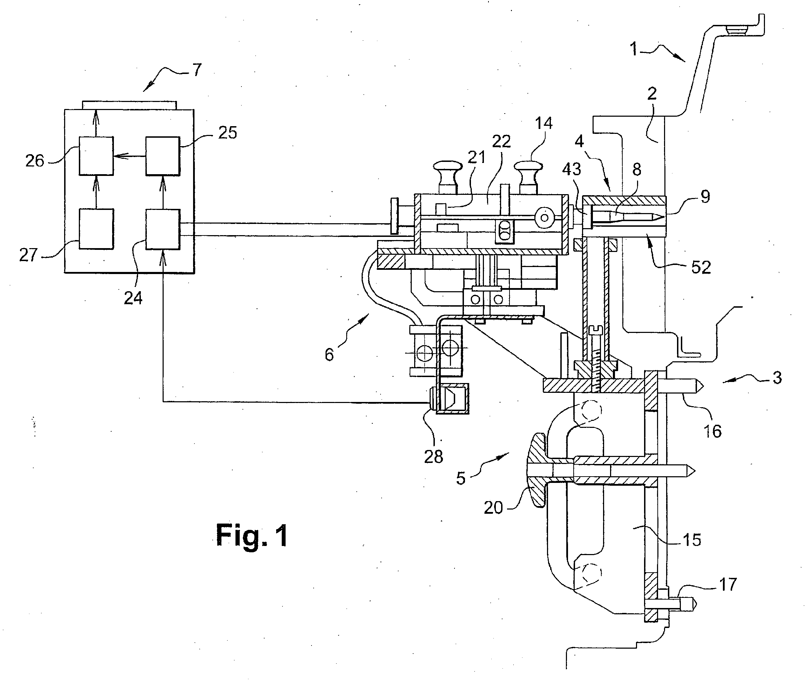

Le mode de réalisation de l'invention s'applique notamment au contrôle de profils de rainures d'aubes ou d'autres alvéoles profonds sur un disque de compresseur ou de turbine. On se reporte d'abord à la figure 1 qui est une vue générale du dispositif en action. Le disque et les rainures entre les aubes portent les références 1 et 2 ; le disque 1 est monté sur un mandrin 3 d'usinage à une position connue. L'outil de coupe a été réglé au mieux et a exécuté une passe dans une première des rainures 2, qu'on désire maintenant de contrôler au moyen du dispositif. Selon les résultats du contrôle de la rainure 2, l'usinage des autres rainures 2 pourra lui succéder, ou au contraire l'outil sera réglé de nouveau.

Le dispositif comprend un palpeur 4, un support 5, une table 6 à mouvements croisés (aussi appelée table en X - Y) entre le palpeur 4 et le support 5, et un système d'exploitation 7 de nature essentiellement informatique.

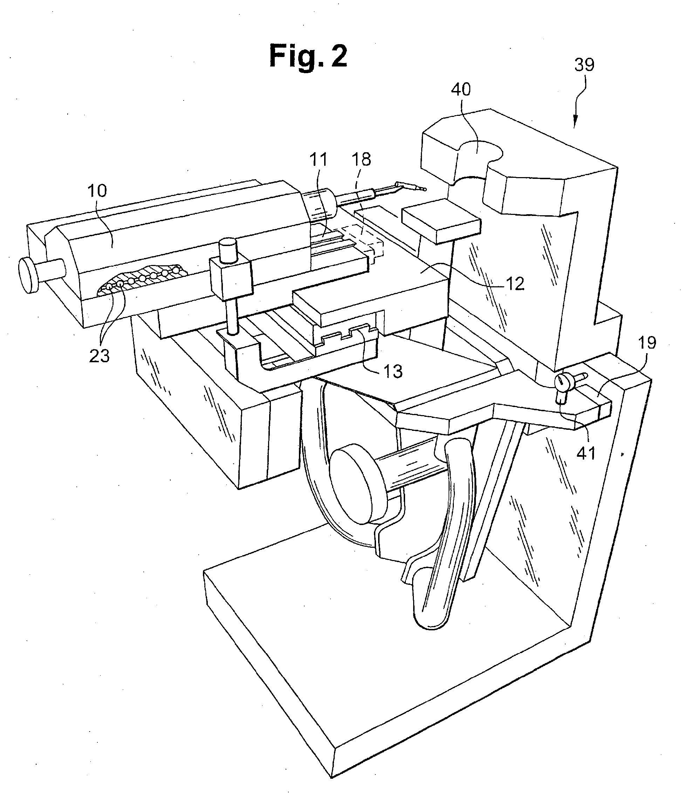

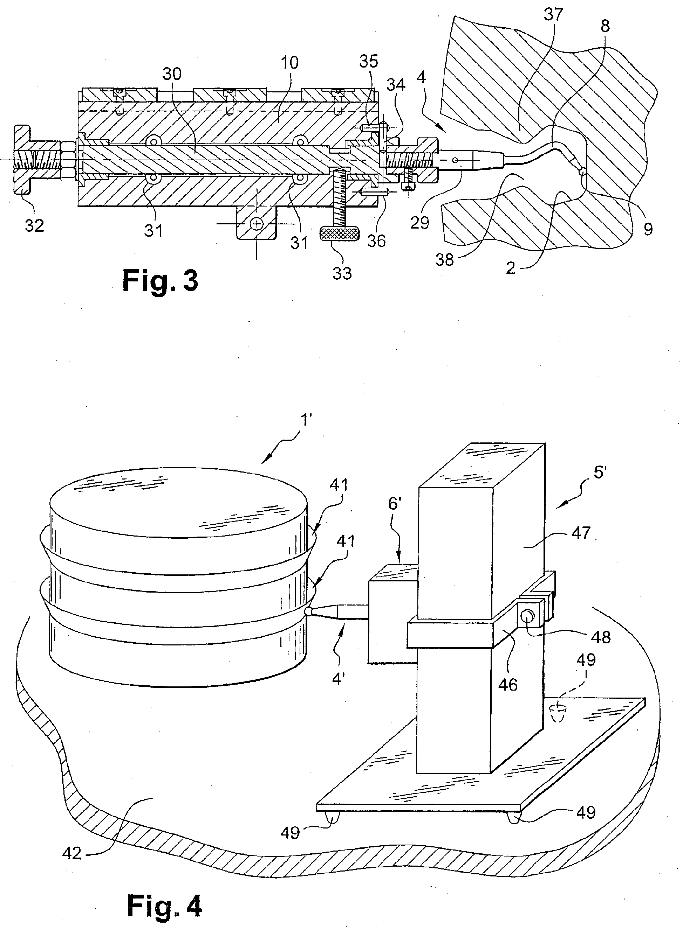

Le palpeur 4 comprend une tige 8 terminée par une bille 9 qui constitue l'élément de palpage. La tige 8 est coudée (figure 3) ou plus généralement oblique pour une raison qu'on expliquera. On se reporte aussi à la figure 2, qui est une vue en perspective du dispositif. La table à mouvements croisés 6 comprend un premier chariot 10 portant le palpeur 4 et mobile sur une première glissière 11 dans la direction d'ensemble de la tige 8, et un deuxième chariot 12 mobile perpendiculairement au précédent et dans la direction de largeur de la rainure 2 sur une deuxième glissière 13. Le premier chariot 10 porte un bouton de préhension 14 pour l'opérateur ; la deuxième glissière 13 est fixée sur un support 5.

Le support 5 comprend, outre un corps 15, des moyens d'immobilisation comprenant ici deux broches dont l'une est circulaire et l'autre à pans coupés 16 et 17, deux butées 18 et 19, et enfin une vis 20. Tous ces moyens d'immobilisation sont associés à des moyens complémentaires établis sur le mandrin 3, qui a été préparé pour les recevoir. La broche 16 s'enfonce dans un perçage circulaire, la broche 17 dans un enfoncement de forme correspondante, les butées 18 et 19 s'appuient sur des faces planes, et l'extrémité de la vis 20 est engagée dans un taraudage. La broche 16 parallèle à la tige 8 du palpeur 4 permet d'orienter celle-ci quand il est enfoncé dans le perçage circulaire du mandrin 3 ; la broche 17 interdit les rotations du support 5 autour du tourillon 16 et les déplacements latéraux de la tige 8 tout en offrant une bonne précision de portée latérale et verticale ; les butées 18 et 19, elles aussi dirigées dans la même direction que le palpeur 4, limitent l'enfoncement du support 5 ; et la vis 20 retient le support 5 pendant le contrôle. Les mouvements du palpeur 4 restent libres dans les directions des glissières 11 et 13.

Les chariots 10, 12 et le corps 15 du support 5 sont munis à leurs jonctions de règles graduées associées à des codeurs optiques 21 et 22 qui mesurent les déplacements des chariots 10 et 12 dans leurs directions respectives avec une précision de l'ordre du micron. Les glissières 11 et 13 sont munies de billes 23 qui garantissent un guidage précis et rigide, mais avec peu de frottement. L'unité de traitement 7 comprend un circuit de lecture 24 relié aux codeurs optiques 21 et 22, une mémoire 25 reliée au circuit de lecture 24 et enregistrant ses résultats, et un moyen d'affichage 26 susceptible de restituer les résultats reçus dans la mémoire 25 ainsi que des résultats de référence présents dans une autre mémoire 27. Un circuit d'aide à la décision peut être ajouté pour mieux expliciter les résultats affichés.

L'unité de traitement 7 comprend encore, mais sur le dispositif, un bouton de commande 28 permettant de commencer la mémorisation des signaux des codeurs optiques 21 et 22 ou au contraire de les arrêter temporairement. Ainsi, l'unité de traitement 7 n'est véritablement active pour recevoir et traiter des mesures que sur commande de l'opérateur, en pratique quand le profil à mesurer est touché. Les déplacements autres du palpeur 4, comme des déplacements erratiques entre deux mesures de portions de mesures, sont cependant lus pour continuer de connaître la position du palpeur 4. La mesure peut ainsi être interrompue et reprise ensuite. Cela est important dans le cas considéré des rainures 2. On aborde maintenant la figure 3 qui détaille le palpeur 4 et les éléments voisins du dispositif. Ainsi qu'on l'a mentionné, la tige 8 est coudée et s'étend d'abord dans une direction latérale, puis dans l'autre après une portion droite 29. De plus, la portion droite 29 est montée sur un axe 30 qu'elle prolonge. L'axe 30 tourne dans le premier chariot 10 autour de paliers 31 ; une rotation manuelle est rendue possible par un bouton 32 sortant du premier chariot 10 à l'opposé du palpeur 4 ; une vis de serrage 33 permet de maintenir le palpeur 4 à une position angulaire invariable. En pratique, deux positions angulaires seront privilégiées et définies par des butées d'un taquet 34 monté sur l'arbre 30 en s'étendant radialement sur une paire de pions 35 et 36 dépassant du premier chariot 10 en direction de la tige 8. Les deux positions de butée sont diamétralement opposées. Elles conviennent respectivement aux deux moitiés du profil de la rainure 2, le coude de la tige 8 étant assez prononcé pour éviter toute collision avec les bords 37 du col 38 de la rainure 2.

Une mesure de profil comprendra donc deux passes, chacune affectée au parcours d'une moitié du profil. Des mémorisations de points sont faites pour des pas de déplacement déterminés des chariots 10 et 12. Quand une moitié de profil a été parcourue complètement, un appui sur le bouton 28 arrête les mémorisations et permet de retourner l'arbre 30 et le palpeur 4 pour parcourir l'autre moitié du profil après avoir commandé une reprise des mémorisations. Une portion de recouvrement des moitiés de profils existe sans que cela soulève de difficulté puisque l'unité de traitement 7 peut superposer les deux relevés ou en faire une moyenne. Si la bille 9 est parfaitement dans l'axe de l'arbre 30, les relevés des deux moitiés de profils peuvent être superposés immédiatement, sinon un calcul de correction de son déplacement latéral quand l'arbre 30 est tourné doit être entrepris dans l'unité de traitement 7.

Les moyens d'affichage 26 peuvent en pratique donner la forme du profil contrôlé, indiquer ses caractéristiques géométriques intrinsèques ou par rapport au disque 1 (puisque le dispositif de contrôle et le disque 1 sont tous deux à des positions déterminées sur le mandrin 3), ou comparer le profil mesuré à des profils admissibles. Une exploitation à la fois précise et moins empirique qu'avec les procédés existants est possible.

Un étalon 39 (figure 2) peut être ajouté au dispositif pour vérifier sa précision ou l'habileté de l'opérateur. Il comprend lui aussi des moyens complémentaires identiques à ceux du mandrin 3 pour retenir le dispositif à une position bien déterminée, ainsi, par exemple, qu'un alvéole 40 dont le profil ressemble un peu à celui à mesurer, sans qu'une similitude y soit vraiment nécessaire. L'opérateur reconnaît le profil de l'alvéole 40 comme pour une mesure ordinaire, et l'unité de traitement 7 compare les résultats au profil réel, enregistré auparavant. L'opérateur reçoit ainsi une indication sur la précision de son travail. Il est possible de compenser une force de manipulation excessive, produisant des déformations, ou une usure de la bille 9 en calculant les erreurs moyennes sur chaque face de l'alvéole 40 et en les retranchant des mesures obtenues sur le profil à mesurer. Une cause d'incertitude est en pratique l'enfoncement des butées 18 et 19 ; des comparateurs 41 peuvent être montés sur des consoles du corps 15 adjacentes à ces butées pour vérifier un enfoncement juste suffisant du support 5, c'est-à-dire un début de sensibilité des comparateurs 41 quand la butée a été établie, mais sans mouvement appréciable de la tige des comparateurs 41. Un aspect intéressant de l'invention est que le palpeur 4 reste à des orientations invariables et connues, et qu'une usure mal répartie de la bille 9 pourra être compensée d'une valeur exacte pour chaque portion de mesure grâce à l'étalonnage et à la connaissance de la portion de bille 9 glissant sur chaque portion du profil de la pièce 1 comme de celui de l'étalon 39.

Un étui 52 (figure 1) entoure le palpeur 4 quand le dispositif est revissé afin de le pratéger ; il est retenu sur un pas de vis 43 à la base de la tige 8.

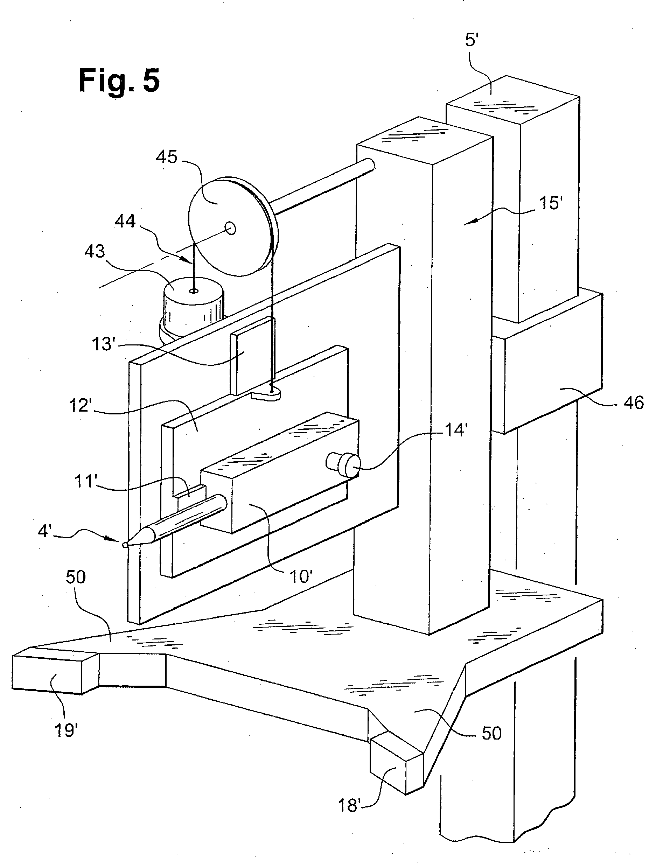

**Un dispositif non revendiqué** apparaît aux figures 4 et 5 dont la première est une vue générale et la seconde une vue de détail. Il comprend, de façon analogue à la réalisation précédente, un palpeur 4', un support 5' et une table à mouvements croisés 6' intermédiaire. La pièce 1' à étudier est un disque de turbine pourvu de reliefs circulaires et notamment de léchettes 41. Elle est posée sur un marbre 42, c'est-à-dire une surface parfaitement plane, de même que le support 5'.

Le palpeur 4' peut, dans ce genre de réalisations où les alvéoles séparant les léchettes 41 ne sont pas élargis vers le fond, être à tige droite et fixé à la table à mouvements croisés 6' ; une réalisation semblable à la précédente pourrait être reprise.

La table à mouvements croisés 6' comprend comme précédemment un premier chariot 10' dont dépend le palpeur 4' (qui lui est ici fixé), un deuxième chariot 12' porteur d'une première glissière 11' sur laquelle le premier chariot 10' coulisse, et une deuxième glissière 13' fixée à un corps 15' du support 5' ; si cependant la première glissière 11' qui régit la pénétration du palpeur 4' est encore orientée dans la direction de sa tige, la deuxième glissière 13' qui régit le mouvement de passe du palpeur 4' est ici verticale, l'examen du profil 1' se faisant dans cette direction.

Le mouvement de la table 6' étant encore manuel, grâce à un bouton 14' encore fixé au premier chariot 10', une position sensiblement stable de la table 6' est assurée par un contrepoids 43 qui équilibre le palpeur 4', le bouton 14' et les parties mobiles de la table 6' ; il est suspendu à un bout d'un câble 44 soutenu par une poulie 45 tournant sur le corps 15' ; le second chariot 12' est suspendu à l'autre bout du câble 44. Des mouvements verticaux du palpeur 4' peuvent ainsi être imposés sans effort notable, et le palpeur 4' peut réciproquement être maintenu facilement à une hauteur désirée.

Le corps 15' du support 5', porteur des parties actives du dispositif, comprend un collier 46 qui lui permet de coulisser sur une colonne 47 ; un boulon 48 permet de le resserrer sur la colonne 47 pour régler la mesure du profil à une hauteur souhaitée. La colonne 47 s'élève sur une base 48 reposant sur le marbre 42 par trois pieds 40 qui fournissent une première immobilisation (en direction verticale et en inclinaison) du dispositif par rapport à la pièce 1'. L'immobilisation peut être complétée par des butées 18' et 19', analogues aux butées 18 et 19 déjà rencontrées, disposées au bout de bras 50 sortant des deux côtés du corps 15'. Les butées 18' et 19' sont mises à reposer la pièce 1' pendant une mesure, ce qui complète l'immobilisation.

La mesure consiste donc à réaliser l'immobilisation du dispositif en le posant sur le marbre 42 à côté de la pièce 1', puis en l'avançant vers celle-ci jusqu'au contact des butées 18' et 19'. Le corps 15' est ensuite installé à la hauteur souhaitée. Enfin, une passe de mesure est faite en déplaçant manuellement le palpeur 4' et en le promenant le long des reliefs de la surface de la pièce 1'. Une unité de traitement semblable à la précédente exploite les mesures.

## Revendications

1. Dispositif de mesure de profil comprenant un palpeur (4), un bouton de manipulation (14) lié au palpeur, un support (5), une table (6) à deux mouvements perpendiculaires liant le support (5) au palpeur (4) ; une paire de capteurs de déplacement (21, 22) disposés entre des portions mobiles de la table pour mesurer des déplacements selon les mouvements perpendiculaires ; des moyens (7) de lecture et de mémorisation des déplacements mesurés ; un mandrin (3) sur lequel une pièce (1) portant le profil est installée à une position connue, en fournissant une référence de position ; et **caractérisé en ce que** le support (5) est portatif et comprend des moyens d'immobilisation (16, 17, 18, 19, 20) et le mandrin (3) est un mandrin d'usinage muni de moyens complémentaires pour recevoir les moyens d'immobilisation : **en ce que** les moyens d'immobilisation du support comprennent une paire d'appuis (18, 19) de part et d'autre du palpeur (4) et dirigés dans une même direction que le palpeur, et les moyens d'immobilisation du support comprennent une paire de broches (16, 17).

2. Dispositif de mesure selon la revendication 1, **caractérisé en ce qu'**il comprend un étalon (39) porteur de moyens complémentaires des moyens d'immobilisation du support.

3. Dispositif de mesure selon l'une quelconque des revendications précédentes, **caractérisé en ce que** le palpeur comprend une tige oblique (8), et un dispositif de retournement (30) de la tige entre deux positions opposées d'un demi-tour, des butées d'arrêt (35, 36) de la tige aux deux positions, et un moyen de maintien (33) de la tige aux deux positions.

4. Dispositif de mesure selon l'une quelconque des revendications précédentes, **caractérisé en ce qu'**il comprend des palpeurs de référence (41) associés aux appuis (18, 19).

5. Dispositif de mesure selon l'une quelconque des revendications précédentes, **caractérisé en ce qu'**il comporte une commande (28) de commencement et d'arrêt de la mémorisation des déplacements.

## Patentansprüche

1. Vorrichtung zur Profilmessung, umfassend einen Fühler (4), einen Bedienknopf (14), der mit dem Fühler verbunden ist, einen Halter (5), einen Tisch (6) mit zwei senkrechten Bewegungen, der den Halter (5) mit dem Fühler (4) verbindet; ein Paar von Wegsensoren (21, 22), die zwischen beweglichen Abschnitten des Tisches angeordnet sind, um Bewegungen entlang der senkrechten Bewegungen zu messen; Mittel (7) zum Einlesen und Speichern der gemessenen Bewegungen; ein Futter (3), an dem ein das Profil tragendes Teil (1) unter Bereitstellen einer Positionsreferenz an einer bekannten Position angebracht ist; und **dadurch gekennzeichnet, dass** der Halter (5) tragbar ist und Festlegungsmittel (16, 17, 18, 19, 20) umfasst und das Futter (3) ein Bearbeitungsfutter ist, das mit ergänzenden Mitteln zur Aufnahme der Festlegungsmittel ausgestattet ist; dass die Festlegungsmittel des Halters ein Paar von Auflagen (18, 19) auf beiden Seiten des Fühlers (4), die in einer gleichen Richtung wie der Fühler ausgerichtet sind, umfassen und die Festlegungsmittel des Halters ein Paar von Spindeln (16, 17) umfassen.

2. Messvorrichtung nach Anspruch 1, **dadurch gekennzeichnet, dass** sie ein ergänzende Mittel der Festlegungsmittel des Halters tragendes Normal (39) umfasst.

3. Messvorrichtung nach einem der vorhergehenden Ansprüche, **dadurch gekennzeichnet, dass** der Fühler eine schräge Stange (8) und eine Vorrichtung zum Umkehren (30) der Stange zwischen zwei gegenüberliegenden Positionen, Anschläge (35, 36) der Stange an den beiden Positionen sowie ein Mittel zum Halten (33) der Stange an den beiden Positionen umfasst.

4. Messvorrichtung nach einem der vorhergehenden Ansprüche, **dadurch gekennzeichnet, dass** sie den Auflagen (18, 19) zugeordnete Referenzfühler (41) umfasst.

5. Messvorrichtung nach einem der vorhergehenden Ansprüche, **dadurch gekennzeichnet, dass** sie einen Betätigungsknopf (28) zum Starten und Anhalten der Speicherung der Bewegungen umfasst.

## Claims

1. Profile measurement device, comprising a feeler (4), a manipulation knob (14) connected to the feeler, a support (5), a table (6) with two perpendicular movements linking the support (5) to the feeler (4) ; a pair of displacement transducers (21, 22) situated between mobile portions of the table for measuring displacements according to the perpendicular movements; means (7) reading and memory storage of the displacements measured ; a mandrel (3) on which a part (1) bearing the profile is installed at a known position, providing a position reference ; and **characterised in that** the support (5) is portable and comprises immobilisation means (16, 17, 18, 19, 20) and the mandrel (3) is a machining member equipped with complementary means for receiving the immobilisation means ; **in that** the immobilisation means of the support comprise a pair of rests (18, 19) either side of the feeler (4) and oriented in a same direction as the feeler, and the immobilisation means of the support comprise a pair of pins (16, 17).

2. Measurement device according to claim 1, **characterised in that** it comprises a standard (39) carrying complementary means of the immobilisation means of the support.

3. Measurement device according to anyone of the previous claims, **characterised in that** the feeler comprises an oblique rod (8), and a return device (30) of the rod between two positions at either end of a U-turn, travel stops (35, 36) of the rod at the two positions, and a holding means (33) of the rod at the two positions.

4. Measurement device according to any one of the previous claims, **characterised in that** it comprises reference feelers (41) associated with the rests (18, 19) .

5. Measurement device according to claim 1, **characterised in that** it comprises a control (28) for the start and stoppage of the displacement memory storage.
